# EUROPEAN PATENT APPLICATION

(11) **EP 2 717 174 A1**
(43) Date of publication of application: **09.04.2014**
(21) Application number: 12187316.0
(22) Date of filing: 04.10.2012
(51) Int. Cl.: G06F 17/30

(54) **A method and system for retrieving and providing requested data from hierarchical data structures**

(71) Applicant: Ricoh Company Ltd., Tokyo 143-8555 (JP)
(72) Inventor: Skvirski, Alexei, 40472 Düsseldorf (DE)
(74) Representative: White, Duncan Rohan

(57) **Abstract**

A method of retrieving data from a database management system. The method comprises providing a first data storage structure for storing data entries for each of a plurality of devices within a hierarchical network, each data entry comprising at least a device identifier and a parameter value; and in response to receiving a request for data in respect of a group of devices located within a specified area of the hierarchical network, generating a second storage structure for storing and mapping device identifiers with full path information identifying the path of the devices within said group of devices; accessing and retrieving the requested data from the first data storage structure for said group of devices; and generating a report in response to the received request, that contains the information retrieved from the first data storage structure, sorted according to the full path information provided in the second data storage structure.

## Description

### Technical Field

The present invention relates to retrieving and providing requested data from hierarchical data structures, and in particular, but not exclusively, to providing data from hierarchical data structures relating to networked electronic devices.

### Background

Many modern day electronic devices, such as printers, copiers, scanners and multi-function devices (MFDs) are provided with network connections so that multiple devices can be more easily managed and controlled through a network. A common method for assigning a large number of devices to a network (for example, 500 or more) is to map each device to a hierarchical structure that mirrors a company's hierarchical infrastructure and/or working environment. This invention relates to hierarchical networks comprising large numbers of devices, for example 200 or more devices, 250 or more devices or 500 or more devices. There is no upper limit to the number of devices that there could be in a hierarchical network.

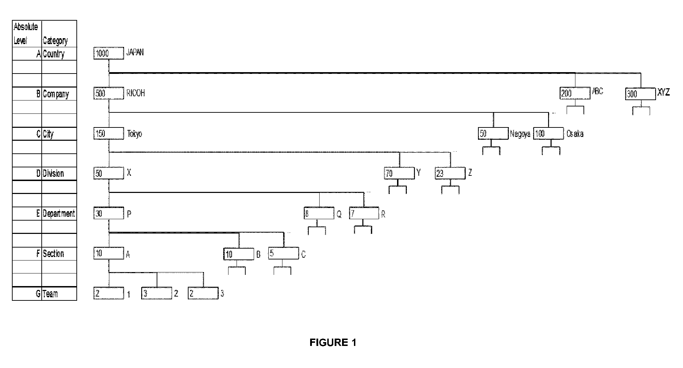

Figure 1 shows an example hierarchical structure of multiple printing devices in a network. Each level within the hierarchy has a category (e.g. country, company, city, division etc.) and is assigned an "absolute level". The numbers indicated in the boxes next to each "location" within the hierarchy indicate the number of devices that are located at that level and below within the hierarchical structure. So, in Figure 1, Japan is assigned as a country in absolute level A and contains 1000 devices. Following the hierarchical structure down, three companies are shown at absolute level B (although there may be more): Ricoh with 500 devices, ABC with 200 devices and XYZ with 300 devices.

The devices are typically controlled by a centralised control system that handles polling the devices to acquire data from them (for example counters, status, expendables information, etc.) and which may also be able to handle other tasks such as error handling and printing charging for example.

For each of the devices within a hierarchical network, data can be stored in the form of a table, the "main table", within a database. The main table will typically be in the storage form of relational database heap table. A section of a basic main table is shown in Table 1. The table contains the Device ID for each of the devices in the network as well as a parameter value in the form of a "Counter Value" which gives an indication of the number of pages that the device has processed (e.g. printed, scanned, faxed, copied etc.). Other device data can be stored as parameter values in the main table, for example Table 2 shows a section of a main table that provides an indication of the absolute level at which the devices are located within the hierarchy as well as hierarchical data in nested set model form which can be used to find the exact location of a device within the hierarchy. Hierarchical data may be provided in other formats, for example using an adjacency list model (containing parent-child relationship information). The main table may also contain other data that can be obtained from each printing device, examples of which could be toner level, various event statuses (like paper low, paper jam, cover open, online, offline, service call, etc), and device counters (absolute number of pages printed, scanned, faxed, copied etc.) which may be for a different set of counter types (black and white, colour, simplex, duplex etc.).

The main table is a good source of information and data to an end-user that knows which Device ID is of interest to them. If a user requests data on a specific Device ID, it is easy for a reporting system to search through the main table and provide the requested data to them. However, it is often the case that a user will request information on a group of devices, for example they request for information in the devices found within Tokyo. Providing the user with a simple list of devices is not much use to them as it requires a detailed knowledge of which devices are located at specific areas within the hierarchy. It would be more useful to provide the user with the information they require sorted according to the pathname, for example first listing all devices found only at the Tokyo level, followed by devices found at the division X level, etc.

Unfortunately, there is no information provided in the main table that easily indicates the path at which a device can be found, and so providing a user with information arranged in this way requires a large amount of searching through the main table, the hierarchical data and also the hierarchical map for each device in order to determine its path. This can be extremely time consuming and is an inefficient process that adds unwanted delays to the time take to return requested data to a user.

### Summary

It is an object of the present invention to provide an improved system and method for retrieving and providing requested data from hierarchical data structures. This can be achieved by creating an auxiliary table to complement the main table within the database.

A first aspect of the invention provides a method of retrieving data from a database management system. The method comprises providing a first data storage structure for storing data entries for each of a plurality of devices within a hierarchical network, each data entry comprising at least a device identifier and a parameter value; and in response to receiving a request for data in respect of a group of devices located within a specified area of the hierarchical network: generating a second storage structure for storing and mapping device identifiers with full path information identifying the path of the devices within said group of devices; accessing and retrieving the requested data from the first data storage structure for said group of devices; and generating a report in response to the received request, that contains the information retrieved from the first data storage structure, sorted according to the full path information provided in the second data storage structure.

Embodiments of the present invention may provide an improved system and method for retrieving and providing requested data from a hierarchical database that is provided as a performance optimized path name composition containing information from the main table, rather than a simple information dump with no meaningful order. The improved system and method may also be more efficient and less memory and processor intensive than previously known systems and methods.

Each location within the hierarchical network as represented by the full path information generated in the second storage structure may be assigned a path name.

The report generated in response to the received request may be organised according to the path name associated with each device identifier.

The method may further comprise receiving parameter values from the plurality of devices over a network via a network interface.

A parameter value may comprise a counter value for one or more of the number of pages printed, scanned, faxed and copied, either in colour or monochrome, one- and/or double sided, with different paper size formats, a toner level identifier, an event status, and device counters for absolute numbers of pages printed.

A second aspect of the invention provides a database management system, comprising: a first data storage structure for storing data entries for each of a plurality of devices within a hierarchical network, each data entry comprising at least a device identifier and a parameter value; a data retrieving means for, in response to receiving a request for data in respect of a group of devices located within a specified area of the hierarchical network, retrieving the requested data from the first data storage structure for said group of devices; a generating means for generating a second data storage structure for storing and mapping device identifiers with full path information identifying the path of the devices within said group of devices; and a report generator for generating a report in response to the received request, that contains the information retrieved from the first data storage structure, sorted according to the full path information provided in the second data storage structure.

The full path information provided in the second data storage structure may be assigned full path names.

The report generator may be configured to generate a report that is organised according to the full path name associated with each device identifier.

A parameter value may comprise a counter value for one or more of the number of pages printed, scanned, faxed and copied, either in colour or monochrome, one- and/or double sided, with different paper size formats, a toner level identifier, an event status, and a device counter for absolute numbers of pages printed.

The database management system may be operable to receive parameter values from the plurality of devices over a network via a network interface.

The plurality of devices may be multi-function devices, printers, scanners and/or copiers.

A third aspect of the invention provides a carrier medium carrying computer readable code for configuring a computer to carry out the method of any one of the above statements relating to the first aspect of the invention.

A fourth aspect of the invention provides a carrier medium carrying computer readable code for configuring a computer as the database management system according to any one of the above statements relating to the second aspect of the invention.

### Brief Description of the Drawings

Further aspects, features and advantages of the invention will become apparent to the reader of the following description of specific embodiments of the invention, provided by way of example only, with reference to the accompanying drawings, in which:
Figure 1 is a hierarchical graph showing an example of a hierarchical system of networked devices;
Figure 2 is a schematic illustration of a database management system; and
Figure 3 is a schematic illustration of a query engine.

### Detailed Description

As discussed above, the current methods and systems for extracting data from a hierarchical database and providing it to a user can be inefficient, and can require multiple searches to be carried out to obtain the desired information. It is not easy to provide the information to the user in a useful format, organised according to path.

A new system and method will now be described, with reference to the figures and tables, which allow for data to be extracted from a hierarchical data structures more easily and efficiently, and provided to an end-user in a more intelligible format.

This is facilitated by the creation of an "auxiliary table" when a request for data is received from a user. The auxiliary table is query specific, and so is created only for the area of the hierarchy that is relevant for the query. The auxiliary table contains full path information for every device within the area of interest of the hierarchy. Each time a new query is submitted, a new auxiliary table will be created to help process the query. The table structure of each auxiliary table that is created will remain the same, however the information contained within the table will be query specific and will therefore vary for each new query that is processed.

An example of an auxiliary table is shown in Table 3. The auxiliary table shown in Table 3 has been created for the whole hierarchy shown in Figure 1 (however, not all devices are shown in the table). An auxiliary table needs to be created each time a new query comes in as the topography of the hierarchy can change (for example if a device is moved within the hierarchy, removed, or if a new device is added).

A further example of an auxiliary table is shown in Table 4. The auxiliary table in Table 4 only refers to devices found in the Tokyo Absolute level or below.

By generating the auxiliary table data when a query is submitted by a user, full path information can be generated for each device. The complete row within the auxiliary table (as read from left to right) for a device indicates the full path taken from the top of the area of relevance (for the present query) of the hierarchy to the location of the device within the hierarchy. For example, in Table 3 device number 102 can be found at the path:
*JAPAN > RICOH > Osaka > Division T > Department M > Section E > Team 5*

Each unique path identified within the auxiliary table can be assigned a path name. The path above may be assigned "Path Name 12", for example, and the path
*JAPAN > RICOH > Tokyo > [blank] > [blank] > [blank] > [blank]*
may be assigned "Path Name 1". These path names enable the results of the query (i.e. the data from the main table returned from the information request) to be delivered to the end-user in a more intelligible way, which is the format that the user has requested.

When an end-user submits a query requesting information from the main table on a group of devices under a certain hierarchical level, the auxiliary table can be used to more efficiently look up and retrieve the data being retrieved from the main table. All information above the level specified by the user is of no interest to the user (at least with respect to this query), and so a set of relative levels can be assigned to each absolute level from the level of interest to the bottom of the hierarchy (or to the bottom level of interest, if one has been specified). This can help the user determine the level at which a device is located relative to the uppermost level of interest of the query.

A specific example of a query from an end-user will now be considered. An end-user at the company Ricoh requests information for all their devices located in Tokyo. The top absolute level of interest will therefore be the City level, absolute level C, which will be assigned relative level 1, absolute level D will be assigned relative level 2, and so on until the bottom of the hierarchy is reached, or the bottom level of interest is reached.

An auxiliary table is automatically created (using an SQL script) that contains Device IDs and full path information for the devices located within the area of interest indicated within the query. Table 4 shows the auxiliary table that would be generated for this example situation.

Once the auxiliary table has been created, the main table can be searched and the data relevant to the device IDs of the devices located within the area of interest (that was requested in the end-user's query) can be easily extracted from it. As the paths of each Device ID of interest have already been determined using the auxiliary table, the information gathered from the main table can be provided to the end-user arranged by path.

Table 5 shows how the information would be provided to the end-user for the example described above according to this method. The information has been provided to the user in the format that has been requested, which is more intelligible, accessible and more meaningful to the end-user than simply a list of Device IDs and the corresponding data extracted from the main table.

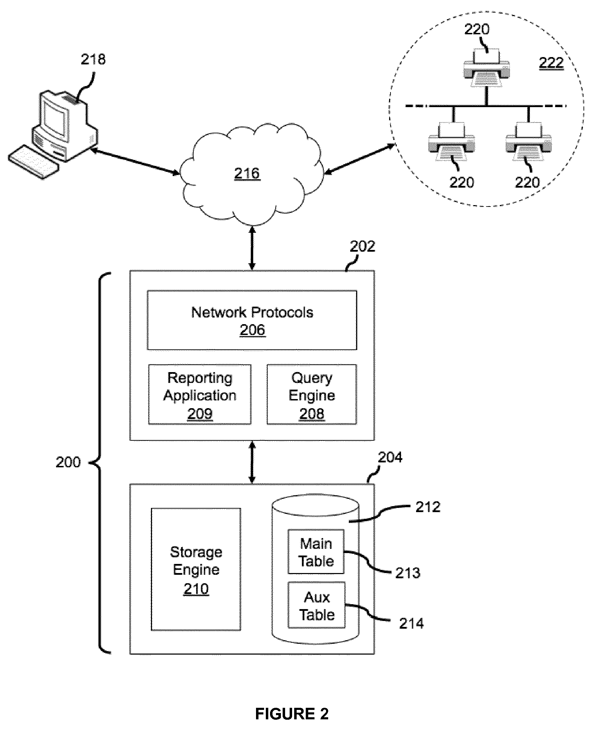

Figure 2 is a schematic representation of a database management system 200, which functions to collect and store data obtained from printing devices 220 within a hierarchical infrastructure 222, and to provide a means of accessing the stored data by the end-user 218 in a computationally efficient manner. The database management system 200 comprises a data accessing means, i.e. a database server 202 and a data storage system 204, though these do not have to be separate sub-systems as shown. Furthermore, any separation need not be "physical", i.e. they may be integrated.

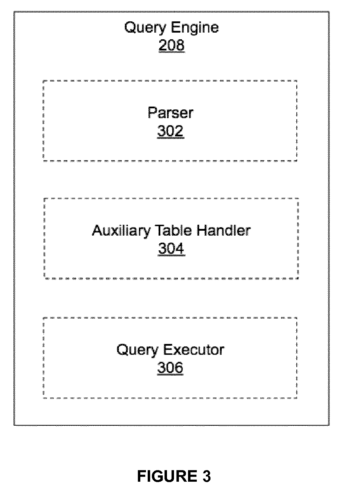

The database server 202 comprises network protocols 206, a query engine 208 and a reporting application 209. The network protocols 206 provide the functions of connection handling, authentication, security, and so forth over network 216. The network 216 can be a wide area network such as the Internet. The query engine 208 is responsible for query execution. Its components may comprise a parser 302, an auxiliary table handler 304, and a query executor 306 (shown in figure 3). In brief, the parser 302 primarily functions to check query syntax. The auxiliary table handler 304 generates and handles information with respect to a second data storage structure, i.e. the auxiliary table 214 (typically communicating through the storage engine 210, but it could communicate directly with the auxiliary table 214 in the database 212), including assigning relative levels pertinent to the query received from the end-user 218, and generating an auxiliary table containing the Device IDs and their respective full path information relevant to the query. The auxiliary table handler may be implemented as a database query in an alternative embodiment, and is not required to be a separate device, module or unit. The query executor 306 can then make requests of the other components of the system, such as the storage engine 210 of the data storage system 204, to retrieve the desired data from a first data storage structure, i.e. the main table 213. Once the data is retrieved, it is passed to the reporting application 209 which uses the information generated by the auxiliary table handler 304 to present the information retrieved from the main table 213 by the query executor 306 in a format suitable for presentation to the end-user (i.e. arranged by full path).

The data storage system 204 comprises a storage engine 210, which is responsible for the efficient storage to and retrieval of data from the database 212. The database server 202 communicates with the storage engine 210 through a storage engine application programming interface (API) (not shown). The data storage system 204 may include a network interface for transmitting and receiving data via network 216 (i.e. not through database server 202) to and from the printing devices. Systems 202, 204 may be implemented as a data processing system having at least one processor. In one embodiment, at least one processor is a conventional processing device, such as a general-purpose microprocessor. The data processing system also includes a memory, which includes program instructions or functional units that implement the aforementioned features, such as the query engine 208 and the storage engine 210.

Although not shown in Figure 2, the database server may further comprise a database maintenance module. This database maintenance module is used to update the tables in the database whenever the topography of the hierarchical infrastructure 222 changes. The database maintenance module may perform regular scans of the hierarchical infrastructure to look for changes, or information may be fed to it directly from the devices within the hierarchical infrastructure. If any changes are detected by the module, then it can send a request to the storage engine 210 to update the tables within the database to reflect the changes. The database maintenance module may not necessarily be a separate module of the database management system. For example, the database maintenance module may be carried out as part of a program installed on the system, such as a reporting infrastructure application (which could also be configured to perform other functions within the system, for example those of the report generator described above).

It will be appreciated by the person of skill in the art that various modifications may be made to the above described embodiments without departing from the scope of the present invention.

**Table 1**

| **Device ID** | **Counter Value** |
|---|---|
| ... | ... |
| 215 | 30 |
| 216 | 2 |
| ... | ... |
| 333 | 15 |
| ... | ... |
| 554 | 0 |
| ... | ... |
| 901 | 254 |
| ... | ... |

**Table 2**

| **Device ID** | **Absolute level** | **Hierarchical data** |
|---|---|---|
| ... | ... | ... |
| 215 | C | [66;67] |
| 216 | C | [68;69] |
| ... | ... | ... |
| 333 | D | [135;136] |
| ... | ... | ... |
| 554 | E | [332;333] |
| ... | ... | ... |
| 901 | E | [705;706] |
| ... | ... | ... |

**Table 3**

| **Device ID** | **A** | **B** | **C** | **D** | **E** | **F** | **G** |
|---|---|---|---|---|---|---|---|
| **1** | JAPAN | ABC | Kumamoto | | | | |
| **2** | JAPAN | ABC | Kumamoto | Division Alpha | Sales | Software | Red Team |
| **3** | JAPAN | ABC | Fukuoka | Division Beta | HR | | |
| ... | | | | | | | |
| **100** | JAPAN | RICOH | Osaka | Division W | | | |
| **101** | JAPAN | RICOH | Osaka | Division W | | | |
| **102** | JAPAN | RICOH | Osaka | Division T | Department M | Section E | Team 5 |
| ... | | | | | | | |
| **215** | JAPAN | RICOH | Tokyo | | | | |
| **216** | JAPAN | RICOH | Tokyo | | | | |
| ... | | | | | | | |
| **333** | JAPAN | RICOH | Tokyo | Division Z | | | |
| ... | | | | | | | |
| **554** | JAPAN | RICOH | Tokyo | Division X | Department Q | | |
| ... | | | | | | | |
| **901** | JAPAN | RICOH | Tokyo | Division X | Department P | | |
| ... | | | | | | | |

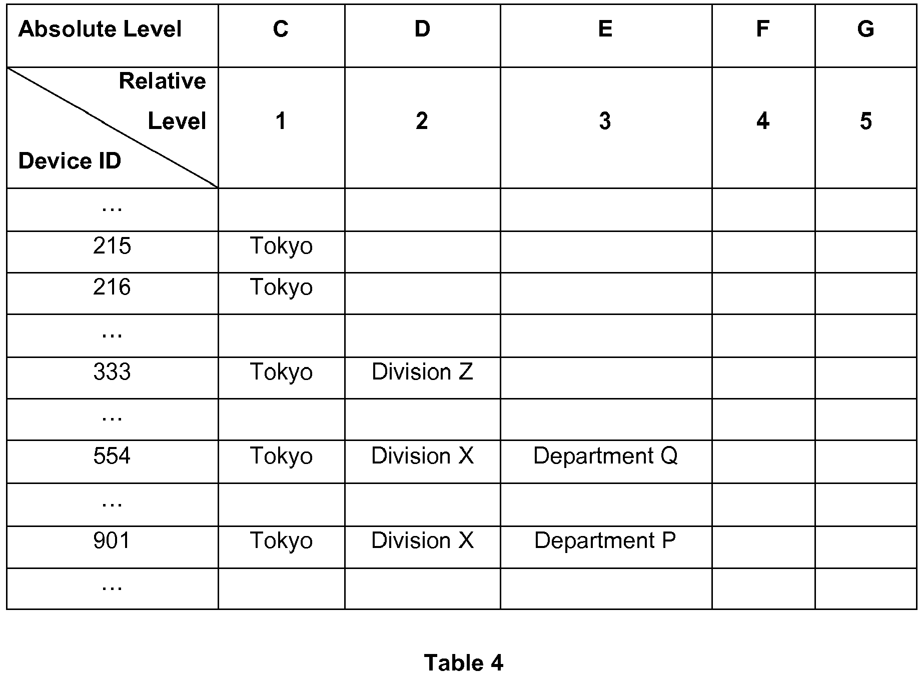

**Table 5**

| **Path Name 1** | **Tokyo** | |
|---|---|---|
| | **Device ID** | **Counter Value** |
| | 215 | 30 |
| | 216 | 2 |
| | ... | ... |

| **Path Name 4** | **Tokyo > Division Z** | |
|---|---|---|
| | **Device ID** | **Counter Value** |
| | 333 | ... |
| | 333 | 15 |
| | ... | ... |

| **Path Name 9** | **Tokyo > Division X > Department Q** | |
|---|---|---|
| | **Device ID** | **Counter Value** |
| | ... | ... |
| | 554 | 0 |
| | ... | ... |

| **Path Name 8** | **Tokyo > Division X > Department P** | |
|---|---|---|
| | **Device ID** | **Counter Value** |
| | ... | ... |
| | 901 | 254 |
| | ... | ... |

## Claims

1. A method of retrieving data from a database management system, the method comprising:
providing a first data storage structure for storing data entries for each of a plurality of devices within a hierarchical network, each data entry comprising at least a device identifier and a parameter value; and
in response to receiving a request for data in respect of a group of devices located within a specified area of the hierarchical network:
generating a second storage structure for storing and mapping device identifiers with full path information identifying the path of the devices within said group of devices;
accessing and retrieving the requested data from the first data storage structure for said group of devices; and
generating a report in response to the received request, that contains the information retrieved from the first data storage structure, sorted according to the full path information provided in the second data storage structure.

2. A method as claimed in claim 1, wherein each location within the hierarchical network as represented by the full path information generated in the second storage structure is assigned a path name.

3. A method as claimed in claim 2, wherein the report generated in response to the received request is organised according to the path name associated with each device identifier.

4. A method as claimed in any one of the preceding claims, further comprising receiving parameter values from the plurality of devices over a network via a network interface.

5. A method as claimed in claim 4, wherein a parameter value can comprise a counter value for one or more of the number of pages printed, scanned, faxed and copied, either in colour or monochrome, one- and/or double sided, with different paper size formats, a toner level identifier, an event status, and device counters for absolute numbers of pages printed.

6. A database management system, comprising:
a first data storage structure for storing data entries for each of a plurality of devices within a hierarchical network, each data entry comprising at least a device identifier and a parameter value;
a data retrieving means for, in response to receiving a request for data in respect of a group of devices located within a specified area of the hierarchical network, retrieving the requested data from the first data storage structure for said group of devices;
a generating means for generating a second data storage structure for storing and mapping device identifiers with full path information identifying the path of the devices within said group of devices; and
a report generator for generating a report in response to the received request, that contains the information retrieved from the first data storage structure, sorted according to the full path information provided in the second data storage structure.

7. A database management system as claimed in claim 6, wherein the full path information provided in the second data storage structure are assigned full path names.

8. A database management system as claimed in claim 7, wherein the report generator is configured to generate a report that is organised according to the full path name associated with each device identifier.

9. A database management system as claimed in any one of claims 6 to 8, wherein a parameter value can comprise a counter value for one or more of the number of pages printed, scanned, faxed and copied, either in colour or monochrome, one- and/or double sided, with different paper size formats, a toner level identifier, an event status, and a device counter for absolute numbers of pages printed.

10. A database management system according to any one of claims 6 to 9, wherein the database management system is operable to receive parameter values from the plurality of devices over a network via a network interface.

11. A database management system as claimed in any one of claims 6 to 10, wherein the plurality of devices are multi-function devices, printers, scanners and/or copiers.

12. A carrier medium carrying computer readable code for configuring a computer to carry out the method of any one of claims 1 to 5.

13. A carrier medium carrying computer readable code for configuring a computer as the database management system according to any one of claims 6 to 11.

## Amended claims

### Amended claims in accordance with Rule 137(2) EPC.

**1.** A method of retrieving data from a database management system, the method comprising:
providing a first data storage structure for storing data entries for each of a plurality of devices within a hierarchical network, said devices being selected from the group consisting printing, copying, scanning and multifunction devices, each data entry comprising at least a device identifier and a
parameter value; and
in response to receiving a request for data in respect of a group of devices located within a specified area of the hierarchical network:
generating a second storage structure for storing and mapping device identifiers with full path information identifying the path of the devices within said group of devices;
accessing and retrieving the requested data from the first data storage structure for said group of devices; and
generating a report in response to the received request, that contains the information retrieved from the first data storage structure, sorted according to the full path information provided in the second data storage structure.

**2.** A method as claimed in claim 1, wherein each location within the hierarchical network as represented by the full path information generated in the second storage structure is assigned a path name.

**3.** A method as claimed in claim 2, wherein the report generated in response to the received request is organised according to the path name associated with each device identifier.

**4.** A method as claimed in any one of the preceding claims, further comprising receiving parameter values from the plurality of devices over a network via a network interface.

**5.** A method as claimed in claim 4, wherein a parameter value comprises a counter value for one or more of the number of pages printed, scanned, faxed and copied, either in colour or monochrome, one- and/or double sided, with different paper size formats, a toner level identifier, an event status, and device counters for absolute numbers of pages printed.

**6.** A database management system, comprising:
a first data storage structure for storing data entries for each of a plurality of devices within a hierarchical network, said devices being selected from the group consisting printing, copying, scanning and multifunction devices, each data entry comprising at least a device identifier and a parameter value;
a data retrieving means for, in response to receiving a request for data in respect of a group of devices located within a specified area of the hierarchical network, retrieving the requested data from the first data storage structure for said group of devices;
a generating means for generating a second data storage structure for storing and mapping device identifiers with full path information identifying the path of the devices within said group of devices; and
a report generator for generating a report in response to the received request,
that contains the information retrieved from the first data storage structure,
sorted according to the full path information provided in the second data storage structure.

**7.** A database management system as claimed in claim 6, wherein the full path information provided in the second data storage structure are assigned full path names.

**8.** A database management system as claimed in claim 7, wherein the report generator is configured to generate a report that is organised according to the full path name associated with each device identifier.

**9.** A database management system as claimed in any one of claims 6 to 8, wherein a parameter value comprises a counter value for one or more of the number of pages printed, scanned, faxed and copied, either in colour or monochrome, one-and/or double sided, with different paper size formats, a toner level identifier, an event status, and a device counter for absolute numbers of pages printed.

**10.** A database management system according to any one of claims 6 to 9, wherein the database management system is operable to receive parameter values from the plurality of devices over a network via a network interface.

**11.** A carrier medium carrying computer readable code for configuring a computer to carry out the method of any one of claims 1 to 5.

**12.** A carrier medium carrying computer readable code for configuring a computer as the database management system according to any one of claims 6 to 10.
